# EUROPEAN PATENT APPLICATION

(11) **EP 0 738 662 A1**
(43) Date of publication of application: **23.10.1996**
(21) Application number: 96500031.8
(22) Date of filing: 11.03.1996
(51) Int. Cl.: B65D 33/16

(54) **Staple for sausages**

(30) Priority: 23.03.1995 ES 9500766 U
(71) Applicant: Lorenzo Barroso, Angel, E-08301 Mataro (Barcelona) (ES)
(72) Inventor: Lorenzo Barroso, Angel, E-08301 Mataro (Barcelona) (ES)
(74) Representative: SUGRANES - VERDONCES - FERREGÜELA

(57) **Abstract**

Staple for sausages (1), of the type which are individually of generally inverted-U shape and designed to be deformed by pressure, closing the ends of sausages by strangulation of the tubular casing (2) of the sausage. The internal edges (3) of their side branches (4) and of the central branch (5), which are to make contact with the tubular casing of the sausage, are given a gently rounded shape of convexly curved cross section, forming zones of very low cutting coefficient by shearing of the material. The respective internal faces of the side and central branches are provided with parallel grooves (6) running in the longitudinal plane of the branches, forming between each of them a respective rib (7) of gently rounded end edge.

## Description

### Technical field

The present invention relates to a staple for sausages, of the type which are individually of a general U-shape and designed to be deformed by pressure, closing the ends of sausages by strangulation of the tubular casing of the sausage.

### Background of the invention

Known in the art are a large number of staples for sausages, made of metallic materials such as aluminium, which have for some years been used for closing sausage casings.

There is, for example, the staple described in Utility Model no. 135.396 in which the staple, of general inverted U-shape, has a profile of ovalled cross section.

Similarly, Utility Models nos. 150.266, 224.246, 226.517 and 268.757 describe strips of U-shaped staples with the ends of their wings bent outwards by way of hooks and connected in strip form.

There are also the staples of Utility Models nos. 219.746, 226.390 and 243.082, together with those described in Utility Models nos. 89.906, 117.730, 107.519 and 112.671.

However, on all the metal staples known to date for sausage casings the internal edges of their side branches and of their central branch have sharp edges which often lead to breakages of the intestine which result in the opening up of orifices which allow the passage of germs and bacteria harmful for preservation of the sausage and for its healthy condition.

### Description of the invention

In essence, the staple for sausages of the invention substantially improves upon the known embodiments, ensuring fixing of the staple while at the same time practically preventing any breakage or tearing of the tubular casing of the sausage during the stapling operation.

In essence, the staple in question is characterized in that the internal edges of its side branches and of its central branch, which are to make contact with the tubular casing of the sausage, are given a gently rounded shape of convexly curved cross section, forming zones of very low cutting coefficient by shearing of the laminar material of the casing; and because the respective internal faces of the side and central branches are provided with parallel grooves running in the longitudinal plane of the branches, forming between each of them a respective rib of gently rounded end edge.

### Brief description of the drawings

The enclosed drawings illustrate, by way of non-restrictive example, a form of embodiment of the staple of the invention.
Fig. 1 is a side elevation view of a U-shaped staple of the invention;
Fig. 2 shows a bottom plan view of the staple of Fig. 1;
Fig. 3 is a perspective view, at slightly reduced scale, of a continuous strip of U-shaped staples linked together longitudinally;
Fig. 4 is an enlarged-scale section view, along axis IV-IV of Fig. 3; and
Fig. 5 is a cross section view, also at slightly enlarged scale, of the fixing of a staple onto a sausage casing.

In said drawings it can be appreciated that the staple for sausages 1 in question is of the type which are individually of inverted-U shape and designed to be deformed by pressure, closing the ends of sausages by strangulation of the tubular casing 2 of the sausage.

The internal edges 3 of the side branches 4 and of the central branchs of the staple 1, which are to make contact with the tubular casing 2 of the sausage, are given a gently rounded shape of convexly curved cross section, forming portions in contact with the casing 2 of very low cutting coefficient by shearing.

The internal faces of the side 4 and central 5 branches are provided with several parallel grooves 6 running in the longitudinal plane of the branches 4 and 5. Between each of the grooves 6 is formed a respective rib 7 of gently rounded end edge.

By means of the staple 1 of the invention, the casing 2 of the sausage is not cut by shearing effect, but rather pressed by the closing pressure of the staple 1 so that, as shown in Fig. 5, there arises no kind of breakage or tear of the tubular casing 2 of the sausage.

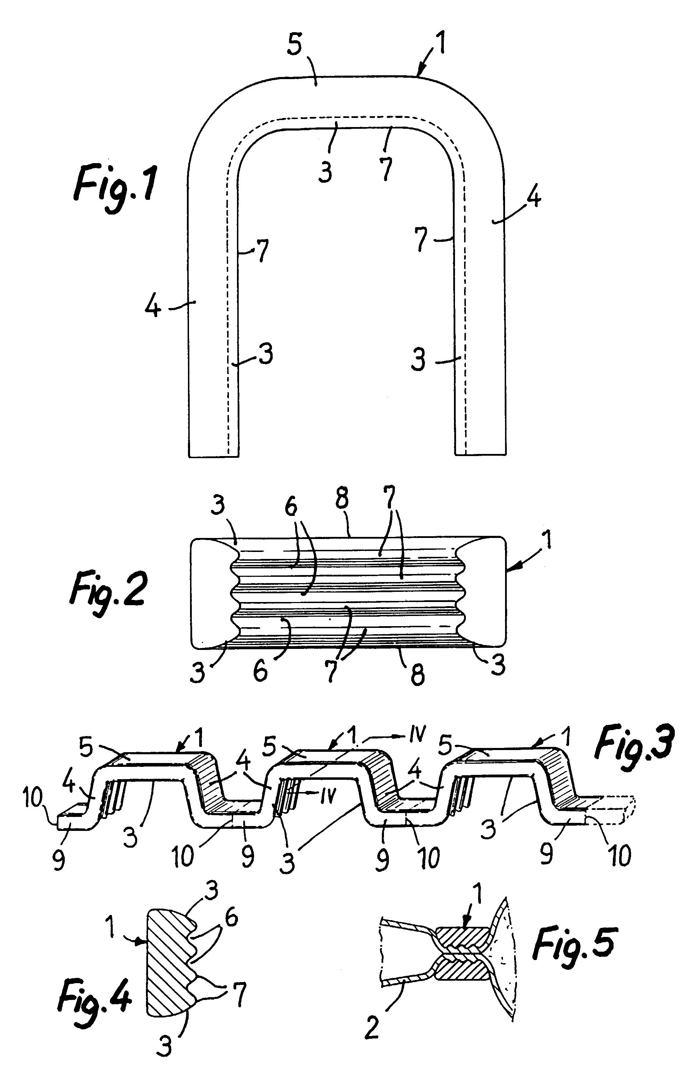

The staple 1 of the form of embodiment shown in Figs. 1 and 2 is configured individually and is fed into the stapling machine in strips of staples formed by the union of staples 1 by their side faces 8 placed in mutual contact, forming strips of some 100 staples.

Figures 3, 4 and 5 show a second form of embodiment of a strip of staples 1, linked longitudinally and uninterruptedly to each other by link sections 9 and capable of being separated one by one along transversal planes 10, implemented at the centre of the link sections 9.

The nature of the invention and the manner of implementation thereof having been sufficiently described, it is recorded hereby that in respect of any arrangements which do not alter or modify its fundamental principle it can be submitted to variations of detail, while the essential characteristics for which Utility Model is sought are as summed up in the following claims.

## Claims

1. A staple for sausages (1), of the type which are individually of generally inverted-U shape and designed to be deformed by pressure, closing the ends of sausages by strangulation of the tubular casing (2) of the sausage, characterized in that the internal edges (3) of their side branches (4) and of the central branch (5), which are to make contact with the tubular casing of the sausage, are given a gently rounded shape of convexly curved cross section, forming zones of very low cutting coefficient by shearing of the material; and because the respective internal faces of the side and central branches are provided with parallel grooves (6) running in the longitudinal plane of the branches, forming between each of them a respective rib (7) of gently rounded end edge.
